# EUROPEAN PATENT SPECIFICATION

(11) **EP 3 481 173 B1**
(45) Date of publication and mention of the grant of the patent: **22.07.2020**
(21) Application number: 17761338.7
(22) Date of filing: 16.06.2017
(51) Int. Cl.: A01G 2/20, A01G 9/029, A01G 9/02

(54) **PLANT CULTIVATION CONTAINER**
PLANTKULTIVIERUNGSBEHÄLTER
RÉCIPIENT POUR LA CULTURE DE PLANTES

(30) Priority: 06.07.2016 SI 201600167
(43) Date of publication of application: 15.05.2019
(73) Proprietor: Kolar, Matej, 6000 Koper (SI)
(72) Inventor: Kolar, Matej, 6000 Koper (SI)
(74) Representative: Jersan, Tatjana
(86) International application number: PCT/SI2017/000013
(87) International publication number: WO 2018/009151

(56) References cited:
- WO-A1-2012/069934
- WO-A1-2015/113379
- FR-A1- 2 402 403
- US-A1- 2009 206 046
- US-A1- 2013 232 871

## Description

The object of the invention is a plant cultivation container, wherein the plants do not need to be transplanted during cultivation or growth. One of important factors when growing rather sensitive plants is that the plants are not subject to shock during cultivation, which is always present when the plants need to be transplanted into larger containers due to their growth. The container is provided with pull-out trays and this allows continuous adaptation of the container volume to the growth and development of the root system. The container of the invention provides for continuous oxygen and air supply to the root system and for development of fibrous roots contrary to root spiralisation which is typical of conventional containers.

The invention belongs to the field of cultivation of plants and vegetables.

The "Air Pot" system for cultivating plants is currently commercially available. It includes containers from recycled plastic provided over the entire surface with holes for the root system aeration. The system provides for continuous oxygen or air supply to the root system and for development of fibrous roots, however it does not provide for volume adaptation of the container. Once a plant is too big, it needs to be transplanted into larger containers.

Another similar commercially available system is the "Smart Pot" system. The container is made from special fabric which is formed into containers of various volumes. The special fabric also provides for continuous oxygen or air supply to the root system and for the development of fibrous roots. To a certain extent, it also provides for water retention after watering. It does not provide for adaptation of the container volume to the growth of a plant. Once a plant is too big, it needs to be transplanted into larger containers.

A plant cultivation container is known from document FR-A-2402403.

The mentioned problems are solved by the plant cultivation container disclosed in claim 1.

The container is formed as an integral container of a preferably quadrangular shape with at least one pull-out tray. The pull-out tray has several functions: partitioning of container volume to compartments, retaining of excess water while watering, and as a drip tray when the entire container volume is in use. The bottom of the container is not flat but has grooves with holes, through which the excess water drains during watering. The container is optionally provided at least in segments on two opposing sides with an edge used as a grip for carrying the container.

Two walls of the container which lie opposite each other are flat, while the other two walls of the container, which also lie opposite each other, have a concave part in the central section, while there are two convex parts to the left and to the right of the concave part. All container walls are provided with notches all over their height for receiving pull-out trays. The container is provided with notches at various heights which in conjunction with several pull-out trays partition the entire volume of the container along its height to several compartments. The notches are sized in a way to adapt to the thickness and height of the side walls and the bottom of a pull-out tray when the trays are inserted into the notches. The pull-out trays are simply insertable into and removable from the notches and this is why the container volume can simply be adapted to the growth and development of the root system. The bottom edge of the notches and of additional gaps on all container walls is preferably in the same plain.

The notch serving as a reception for the bottom of the tray, hereinafter a horizontal notch, is formed in both straight walls and in the concave part of both other two walls. The notch is formed preferably horizontally. The notch serving as a reception for two side walls of the tray, hereinafter a vertical notch, is formed in straight walls preferably at the external edge of the container and in both convex parts of the other two walls, preferably at the external edge of the container. The notch is formed preferably vertically.

Each of the walls of the container is provided in the horizontal notches with at least one additional gap for air supply to the root system. In the event of several additional gaps formed in each horizontal notch, they are preferably arranged equidistantly. At least one additional gap formed in the horizontal notch in the straight wall, hereinafter an indicator gap, is higher than the height of the side wall of the tray and reaches above the side wall. It is used as an indicator to evaluate whether the root system in the compartment has grown to such an extent that the tray needs to be pulled out thus increasing the volume of the container.

The trays are insertable into the container on the side of one or another straight wall of the container. The pull-out tray is always adapted to the shape of the container and is preferably of a quadrangular shape. The tray width is somewhat smaller than the width of a straight wall due to the formation of the vertical notch for receiving a side wall of the tray, while the tray length is somewhat larger than each width of the wall with the concave part, such that part of the tray, after having been inserted, projects from the plain of the straight walls on one and the other side. In this way, all four side walls of the tray are distant from the walls of the container at least in part and a space is created for the air to reach the root system through additional gaps. On the container side with the straight walls, the space is created due to a larger length of the tray, while on the container side having the walls with the convex part, the space for air access is defined by the depth of the concave part. The side walls of the tray extend through the vertical notches formed in both convex parts and are distant from the concave part of the wall.

The tray consists of a bottom and four side walls, wherein one of the tray side walls is detachably attachable to the tray. The bottom of the tray, two side walls and the rear wall are made from one piece. The fourth side wall, i. e. the front wall, is formed as an independent element consisting of two side walls, a bottom wall and a transversal wall, wherein the bottom parts of the side walls and the bottom wall are formed with a double wall such that a gap is created, into which, once the front wall is attached to the tray, the bottom and two opposite side walls of the tray fit in order to form a firm connection. The tray consists of two parts in order to provide for insertion of the tray into the notches formed on the walls of the container.

The sizes of the notches are always adapted to the sizes of the tray in a way that a simple insertion and pulling-out of the tray is possible. The width and height of the horizontal notch is always adequately adapted to the thickness and width of the bottom of the tray, the width and height of the vertical notch is always adequately adapted to the thickness and height of the side walls of the tray.

The plant cultivation container is preferably made from elastic plastic materials which may bend upon force exertion. The side walls are always inclined at a certain angle with respect to the vertical gap. This means that the angle formed by each of the side walls with the tray bottom is always somewhat bigger or smaller than the angle of the vertical gap, formed by the latter with respect to the plain which is defined by the bottom of the container. This angle is bigger than 0 degrees and smaller than 5 degrees. This angle preferably amounts to 3 degrees.

Due to ductility of the material and due to the above indicated different inclination of the side walls with respect to the vertical gap a tight contact occurs when the side walls are inserted into the vertical gaps and the plastic material in the contact gets slightly deformed. Water drain at the contact between the vertical gaps and the side walls of the tray is herewith prevented. As the side walls are formed at an inclination slightly different from the inclination of the vertical gap, possible deviations in the dimensions of the gaps, which occur during the production of the container, are eliminated.

The invention will be further explained in more detail by way of an embodiment and drawings, in which:
Figure 1 shows the container of the invention - side view with a concave part of the wall
Figure 2 shows the container of the invention - view from the side with a straight wall
Figure 3 shows the container of the invention - cross-section along plain A
Figure 4 shows the container of the invention - cross-section along plain B
Figure 5 shows the container of the invention - axonometric projection

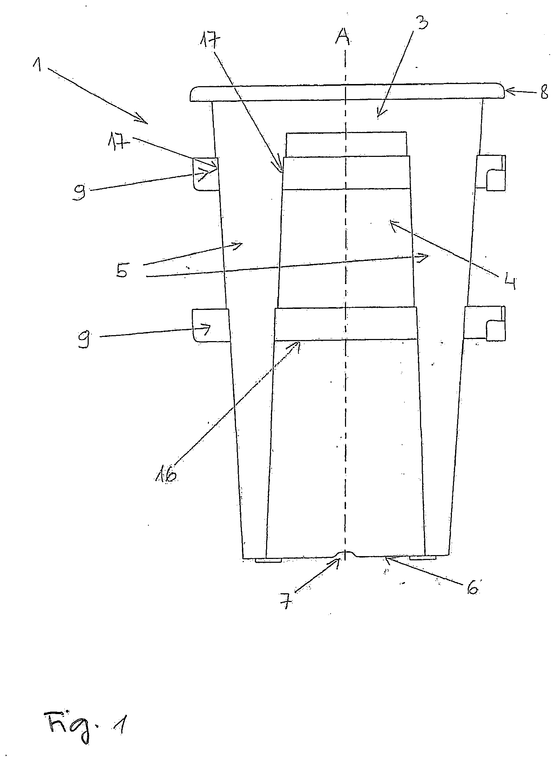

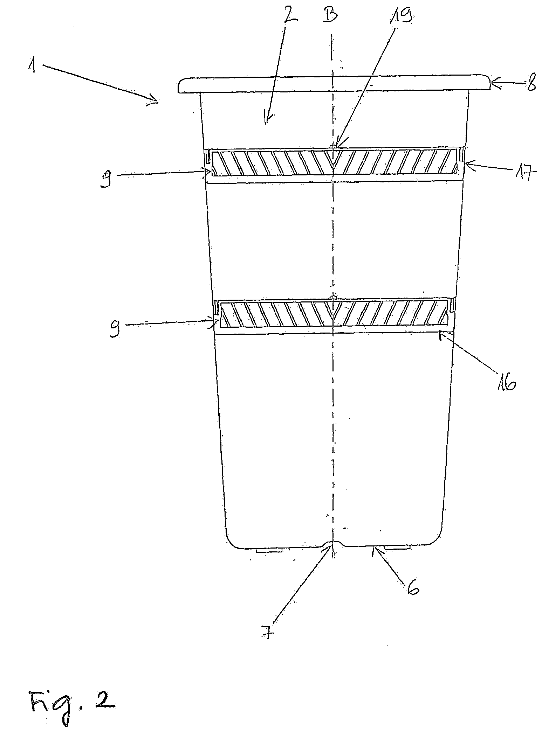

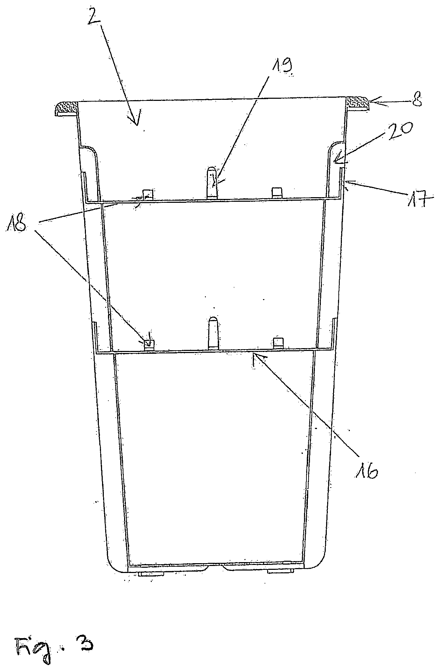

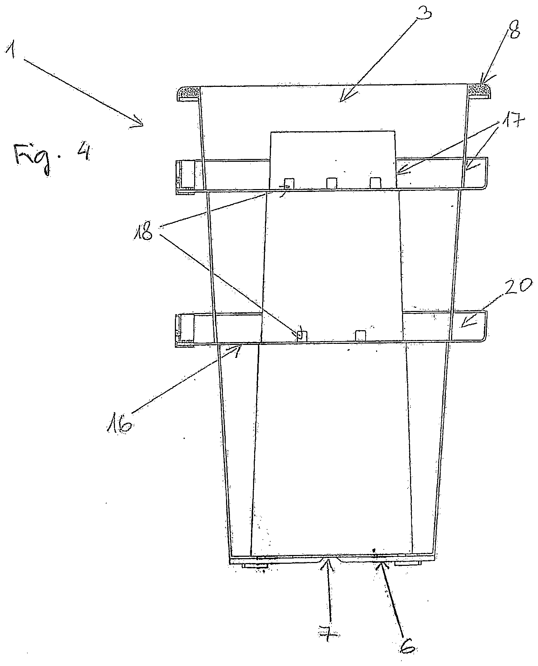

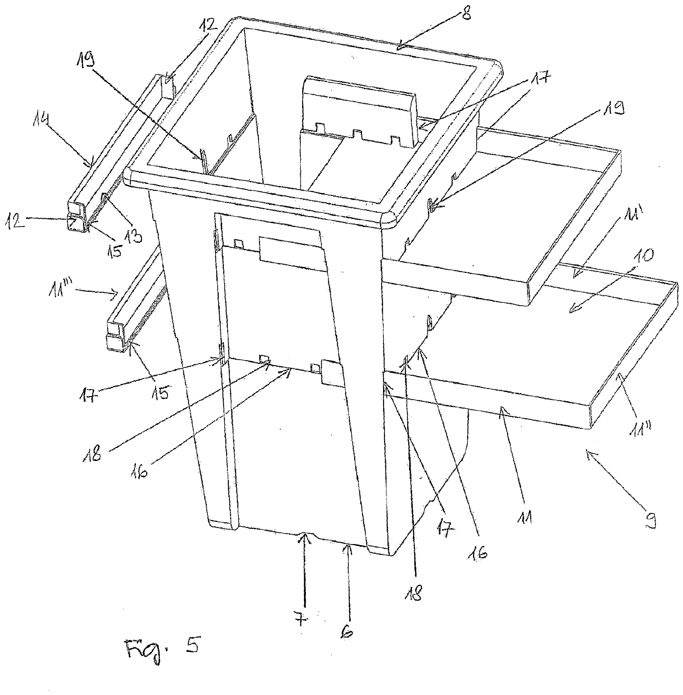

A container 1 of the invention shown in Figures 1 to 5 is of a quadrangular shape and consists of four walls, wherein two walls 2 of the container 1, which lie opposite each other, are straight, while the other two walls 3 of the container 1, which also lie opposite each other, are provided with a concave part 4 in the central part, while there are two convex parts 5 to the left and to the right of the concave part 4. The bottom 6 of the container 1 is provided with grooves 7 with holes (not shown in figures), while the upper part of the container is circumferentially provided with an edge 8 serving as a grip for transporting the container 1. The container 1 includes two pull-out trays 9. All walls 2, 3 of the container 1 are provided with notches formed over the height of the container 1 for the reception of the pull-out trays 9. The notches are sized in a way to adapt to the thickness and height of the side walls and the bottom of the pull-out tray 9, when the trays 9 are inserted into the notches.

The tray 9 consists of a bottom 10, two side walls 11, 11', a rear wall 11" and a front wall 11'" which is detachably attachable to the tray 9. The tray bottom 10, the two side walls 11, 11' and the rear wall 11" are formed from one piece. The front wall 11"' is formed as an independent element consisting of two lateral walls 12, a bottom wall 13 and a transversal wall 14, wherein the bottom parts of the side walls 12 and the bottom wall 13 are provided with a double wall such that a gap 15 is created, into which, once the front wall 11'" is attached to the tray 9, the bottom 10 and two opposite side walls 11, 11' of the tray 9 fit in order to form a firm connection. The tray 9 consists of two parts in order to provide for insertion of the tray 9 into the notches formed on the walls 2, 3 of the container 1.

A horizontal notch 16 serving as a reception for the bottom 10 of the tray 9 is formed in both straight walls 2 and in the concave part 4 of both other two walls 3. The notch 16 is formed horizontally. A vertical notch 17 serving as reception of the two walls 11, 11' of the tray 9 is formed in straight walls 2 at the external edge of the container 1 and in both convex parts 5 of the other two walls 3 at the external edge of the container 1. The vertical notch 17 is formed at an angle with respect to the plain defined by the bottom 6 of the container 1, such that the gap 17 extends in parallel with the convex part 5 of the wall 3.

Each of the walls 2, 3 of the container 1 is provided in the horizontal notches 16 with additional gaps 18 for air supply to the root system said gaps being equidistantly arranged. The central gap in the horizontal notch 16 in the straight wall 2 is formed as an indicator gap 19 which is higher than the height of the side wall 11", 14 of the tray 9 and reaches above the side wall and is used as an indicator to evaluate whether the root system in the compartment has grown to such an extent that the tray needs to be pulled out thus increasing the volume of the container.

The width and height of the horizontal notch 16 is always adequately adapted to the thickness and width of the bottom 10 of the tray 9, the width and height of the vertical notch 17 is always adequately adapted to the thickness and height of the side walls 11, 11' of the tray 9.

The pull-out tray 9 is of a quadrangular shape. The width of the tray 9 is somewhat smaller than the width of the straight wall 2 due to the vertical notch 17 for the reception of the side wall 11, 11' of the tray 9, while the length of the tray 9 is somewhat larger than the width of the wall 3 with the concave part 4, such that part of the tray 9 projects from the plain of the straight walls 2 on one and the other side. A space 20 is thus created for air access to the root system through additional gaps 18, 19.

The angle formed by each of the side walls 11, 11' with the tray bottom 10 is somewhat bigger than the angle formed by the vertical gap 17 with respect to the plain which is defined by the bottom 6 of the container 1.

When the container of the invention is used, the lowest compartment is first filled with adequate substrate for plant cultivation up to the first set of notches. A first tray is then inserted into the notches and a front wall is attached. Then a second compartment is filled with substrate up to the next set of notches, a next tray is inserted and a front wall is attached. The procedure is repeated depending on the number of compartments. A plant is planted into the last compartment. When the plant grows, its root system gets stronger and when the roots fill the entire compartment, which is evaluated by means of the indicator gap, a tray is optionally removed and the plant and the roots have the next compartment available for the growth.

The container of the invention allows a much better exploitation of the substrate because the plant roots fill up the entire volume of the cultivation container. Spiralisation of roots on the container bottom is observed in conventional containers, while the container of the invention is specific in being partitioned to compartments by trays. The job of a cultivator is simplified since there is no need for transplantation. The plants are not subject to transplantation shock due to contact with light. Thanks to the additional gaps formed in the individual notches, the entire root system is supplied with fresh air and oxygen. When this container is used, no extra drip trays need to be purchased, because the trays have a double function: a function of a drip tray and they also allow transfer of the roots to another compartment. The container also contributes to the cleanliness of a room since the substrate remains in the same container during the entire growth cycle.

## Claims

1. A plant cultivation container formed as an integral container preferably of a quadrangular shape and consisting of four walls 2, 3 and a bottom 6 provided with grooves 7 with holes, **characterised in that** the container includes at least one pull-out tray 9, wherein the tray 9 consists of a bottom 10, two side walls 11, 11', a rear wall 11" and a front wall 11'" which is detachably attachable to the tray 9, and all walls 2, 3 of the container 1 are provided along their heights with horizontal notches 16 and vertical notches 17 for receiving the pull-out trays, wherein the notches 16, 17 are dimensioned in a way that, when the trays 9 are inserted into the notches 16, 17, the latter adapt to the thickness and height of the side walls 11, 11' and the bottom 10 of the pull-out tray 9.

2. The container according to claim 1, **characterised in that** the two walls 2 of the container 1, which lie opposite each other, are straight, while the other two walls 3 of the container 1, which also lie opposite each other, are provided with a concave part 4 in the central part, while there are two convex parts 5 to the left and to the right of the concave part 4.

3. The container according to claim 1, **characterised in that** the front wall 11'" of the tray 9 is formed as an independent element consisting of two lateral walls 12, a bottom wall 13 and a transversal wall 14, wherein the bottom parts of the side walls 12 and the bottom wall 13 are provided with a double wall such that a gap 15 is created, into which, once the front wall 11'" is attached to the tray 9, the bottom 10 and two opposite side walls 11, 11' of the tray 9 fit in order to form a firm connection.

4. The container according to claim 1, **characterised in that** the horizontal notch 16 serving as a reception for the bottom 10 of the tray 9 is formed in both straight walls 2 and in the concave part 4 of both other two walls 3, and the vertical notch 17 serving as reception of the two walls 11, 11' of the tray 9 is formed in straight walls 2 at the external edge of the container 1 and in both convex parts 5 of the other two walls 3 at the external edge of the container 1, wherein the vertical notch 17 is formed at an angle with respect to the plain defined by the bottom 6 of the container 1, such that the gap 17 extends in parallel with the convex part 5 of the wall 3.

5. The container according to claim 1, **characterised in that** the width and height of the horizontal notch 16 is always adequately adapted to the thickness and width of the bottom 10 of the tray 9, the width and height of the vertical notch 17 is always adequately adapted to the thickness and height of the side walls 11, 11' of the tray 9.

6. The container according to claim 1, **characterised in that** each of the walls 2, 3 of the container 1 is provided in the horizontal notches 16 with additional gaps 18 which are equidistantly arranged and that a central gap in the horizontal notch 16 in the straight wall 2 is formed as an indicator gap 19 which is higher than the height of the side wall 11", 14 of the tray 9.

7. The container according to claim 1, **characterised in that** the width of the tray 9 is somewhat smaller than the width of the straight wall 2 due to the vertical notch 17 for the reception of the side wall 11, 11' of the tray 9, and the length of the tray 9 is somewhat larger than the width of the wall 3 with the concave part 4, such that part of the tray 9 projects from the plain of the straight walls 2 on one and the other side and a space 20 is thus created for air access to the root system through additional gaps 18, 19.

8. The container according to claim 1, **characterised in that** the angle formed by each of the side walls 11, 11' with the tray bottom 10 is bigger than 0 degrees and smaller than 5 degrees from the angle formed by the vertical gap 17 with respect to the plain defined by the bottom 6 of the container 1.

## Patentansprüche

1. Pflanzenzuchtbehälter, der als ein integraler, vorzugsweise viereckiger Behälter ausgebildet ist und aus vier Wänden 2, 3 und einem mit Nuten 7 mit Löchern versehenen Boden 6 besteht, **dadurch gekennzeichnet, dass** der Behälter mindestens ein Ausziehfach 9 aufweist, wobei das Fach 9 aus einem Boden 10, zwei Seitenwänden 11, 11', einer Rückwand 11" und einer abnehmbaren Vorderwand 11"', die am Fach 9 befestigt werden kann, besteht, und alle Wände 2, 3 des Behälters 1 sind entlang ihrer Höhen mit horizontalen Kerben 16 und vertikalen Kerben 17 zur Aufnahme des Ausziehfaches versehen, wobei die Kerben 16, 17 derart bemessen sind, dass sich diese beim Einsetzen der Fächer 9 in die Kerben 16, 17 an die Dicke und Höhe der Seitenwände 11, 11' und des Bodens 10 des Ausziehfaches 9 anpassen.

2. Behälter nach Anspruch 1, **dadurch gekennzeichnet, dass** die beiden einander gegenüberliegenden Wände 2 des Behälters 1 gerade sind, während die anderen beiden einander gegenüberliegenden Wände 3 des Behälters 1 im Mittelteil mit einem konkaven Teil 4 versehen sind, während zwei konvexe Teile 5 links und rechts des konkaven Teils 4 vorhanden sind.

3. Behälter nach Anspruch 1, **dadurch gekennzeichnet, dass** die Vorderwand 11'" des Faches 9 als eigenständiges Element aus zwei Seitenwänden 12, einer Bodenplatte 13 und einer Querwand 14 ausgebildet ist, wobei die Bodenteile der Seitenwände 12 und die Bodenplatte 13 mit einer Doppelwand versehen sind, so dass ein Spalt 15 entsteht, in den nach dem Anbringen der Vorderwand 11'" an das Fach 9 der Boden 10 und zwei gegenüberliegende Seitenwände 11, 11' des Faches 9 passen, um eine feste Verbindung zu bilden.

4. Behälter nach Anspruch 1, **dadurch gekennzeichnet, dass** die als Aufnahme für den Boden 10 des Faches 9 dienende horizontale Kerbe 16 sowohl in den geraden Wänden 2 als auch in dem konkaven Teil 4 der beiden anderen Wände 3 ausgebildet ist, und die als Aufnahme der beiden Wände 11, 11' des Faches 9 dienende vertikale Kerbe 17 in geraden Wänden 2 am äußeren Rand des Behälters 1 und in beiden konvexen Teilen 5 der anderen beiden Wände 3 am äußeren Rand des Behälters 1 ausgebildet ist, wobei die vertikale Kerbe 17 in einem Winkel zu der durch den Boden 6 des Behälters 1 definierten Ebene ausgebildet ist, so dass sich die Kerbe 17 parallel zum konvexen Teil 5 der Wand 3 erstreckt.

5. Behälter nach Anspruch 1, **dadurch gekennzeichnet, dass** die Breite und Höhe der horizontalen Kerbe 16 immer ausreichend an die Dicke und Breite des Bodens 10 des Faches 9 angepasst ist, wobei die Breite und Höhe der vertikalen Kerbe 17 immer ausreichend an die Dicke und Höhe der Seitenwände 11, 11' des Faches 9 angepasst ist.

6. Behälter nach Anspruch 1, **dadurch gekennzeichnet, dass** jede der Wände 2, 3 des Behälters 1 in den horizontalen Kerben 16 mit zusätzlichen Spalten 18 versehen ist, die äquidistant angeordnet sind und dass ein zentraler Spalt in der horizontalen Kerbe 16 in der geraden Wand 2 als ein Indikatorspalt 19 ausgebildet ist, der höher ist als die Höhe der Seitenwand 11", 14 des Faches 9.

7. Behälter nach Anspruch 1, **dadurch gekennzeichnet, dass** die Breite des Faches 9 aufgrund der vertikalen Kerbe 17 zur Aufnahme der Seitenwand 11, 11' des Faches 9, etwas geringer ist als die Breite der geraden Wand 2, und die Länge des Faches 9 etwas grösser ist als die Breite der Wand 3 mit dem konkaven Teil 4, so dass ein Teil des Faches 9 aus der Ebene der geraden Wände 2 auf der einen Seite herausragt und somit ein Raum 20 für die Luftzufuhr zum Wurzelsystem durch zusätzliche Spalte 18, 19 entsteht.

8. Behälter nach Anspruch 1, **dadurch gekennzeichnet, dass** der Winkel, der durch jede der Seitenwände 11, 11' mit dem Fachboden 10 gebildet wird, grösser als 0 Grad und kleiner als 5 Grad zu dem Winkel ist, der durch den vertikalen Spalt 17 in Bezug auf die Ebene gebildet wird, die durch den Boden 6 des Behälters 1 definiert ist.

## Revendications

1. Récipient pour la culture de plantes se présentant sous la forme d'un récipient monobloc de forme quadrangulaire et constitué de quatre parois 2, 3 et d'un fond 6 muni de rainures 7 avec des trous, **caractérisé en ce que** le récipient comprend au moins un plateau escamotable 9, le plateau 9 étant constitué d'un fond 10, de deux parois latérales 11, 11', d'une paroi arrière 11" et d'une paroi avant 11'" qui peut être fixée de manière amovible au plateau 9, et toutes les parois 2, 3 du récipient 1 sont pourvues, le long de leurs hauteurs, des encoches horizontales 16 et des encoches verticales 17 pour recevoir les plateaux escamotables, les encoches 16, 17 étant dimensionnées de telle sorte que, lorsque les plateaux 9 sont insérés dans les encoches 16, 17, ces derniers s'adaptent à l'épaisseur et à la hauteur des parois latérales 11, 11' et au fond 10 du plateau escamotable 9.

2. Récipient selon la revendication 1, **caractérisé en ce que** les deux parois 2 du récipient 1, qui se trouvent en face l'une de l'autre, sont droites, tandis que les deux autres parois 3 du récipient 1, qui se trouvent également en face l'une de l'autre, sont pourvues d'une partie concave 4 dans la partie centrale, tandis qu'il y a deux parties convexes 5 à gauche et à droite de la partie concave 4.

3. Récipient selon la revendication 1, **caractérisé en ce que** la paroi avant 11" du plateau 9 se présente sous la forme d'un élément indépendant constitué de deux parois latérales 12, d'une paroi inférieure 13 et d'une paroi transversale 14, les parties inférieures des parois latérales 12 et la paroi inférieure 13 étant pourvues d'une double paroi de telle sorte qu'un espace 15 est créé, dans lequel, une fois que la paroi avant 11'" est fixée au plateau 9, le fond 10 et les deux parois latérales opposées 11, 11' du plateau 9 s'ajustent pour former une liaison solide.

4. Récipient selon la revendication 1, **caractérisé en ce que** l'encoche horizontale 16 servant à recevoir le fond 10 du plateau 9 est formée dans les deux parois droites 2 et dans la partie concave 4 des deux autres deux parois 3, et que l'encoche verticale 17 servant à recevoir les deux parois 11, 11' du plateau 9 est formée dans des parois droites 2 au bord externe du récipient 1 et dans les deux parties convexes 5 des deux autres parois 3 au bord externe du récipient 1, l'encoche verticale 17 étant formée selon un angle par rapport au plan défini par le fond 6 du récipient 1, de telle sorte que l'encoche 17 s'étend parallèlement à la partie convexe 5 de la paroi 3.

5. Récipient selon la revendication 1, **caractérisé en ce que** la largeur et la hauteur de l'encoche horizontale 16 sont toujours correctement adaptées à l'épaisseur et à la largeur du fond 10 du plateau 9, la largeur et la hauteur de l'encoche verticale 17 sont toujours correctement adaptées à l'épaisseur et à la hauteur des parois latérales 11, 11' du plateau 9.

6. Récipient selon la revendication 1, **caractérisé en ce que** chacune des parois 2, 3 du récipient 1 est prévue dans les encoches horizontales 16 avec des espaces supplémentaires 18 qui sont disposés à équidistance et qu'un espace central dans l'encoche horizontale 16 dans la paroi droite 2 est formé comme un espace indicateur 19 qui est supérieur à la hauteur de la paroi latérale 11", 14 du plateau 9.

7. Récipient selon la revendication 1, **caractérisé en ce que** la largeur du plateau 9 est légèrement plus petite que la largeur de la paroi droite 2 en raison de l'encoche verticale 17 pour recevoir la paroi latérale 11, 11' du plateau 9, et la longueur du plateau 9 est légèrement plus grande que la largeur de la paroi 3 avec la partie concave 4, de telle sorte qu'une partie du plateau 9 se projette à partir du plan des parois droites 2 sur l'un côté et l'autre des côtés et un espace 20 est ainsi créé pour ménager un accès à l'air pour le système racinaire par l'intermédiaire des espaces supplémentaires 18, 19.

8. Récipient selon la revendication 1, **caractérisé en ce que** l'angle formé par chacune des parois latérales 11, 11' avec le fond du plateau 10 est supérieur à 0 degrés et inférieur à 5 degrés par rapport à l'angle formé par l'espace vertical 17 par rapport au plan défini par le fond 6 du récipient 1.
